# FASCICULE DE BREVET EUROPEEN

(11) **EP 1 567 751 B1**
(45) Date de publication et mention de la délivrance du brevet: **29.03.2006**
(21) Numéro de dépôt: 03796158.8
(22) Date de dépôt: 04.12.2003
(51) Int. Cl.: F01L 1/047, F16H 57/04, F02B 67/00, F01M 1/06, F02M 39/02, F02M 37/04

(54) **DISPOSITIF D'ACCOUPLEMENT D'UN ORGANE ROTATIF A UN ARBRE A CAMES**
ANKUPELLUNGSVORRICHTUNG EINES DREHELEMENTES MIT EINER NOCKENWELLE
DEVICE FOR COUPLING A ROTARY MEMBER TO A CAMSHAFT

(30) Priorité: 05.12.2002 FR 0215335
(43) Date de publication de la demande: 31.08.2005
(73) Titulaire: Renault s.a.s., 92100 Boulogne Billancourt (FR)
(72) Inventeur: ESCALERE, Christophe, F-92130 Issy Les Moulineaux (FR)
(74) Mandataire: Rougemont, Bernard
(86) Numéro de dépôt international: PCT/FR2003/003587
(87) Numéro de publication internationale: WO 2004/053302

(56) Documents cités:
- DE-A- 3 625 657
- US-A- 4 436 067
- US-A- 4 553 510
- US-A- 4 565 168
- PATENT ABSTRACTS OF JAPAN vol. 1997, no. 06, 30 juin 1997 (1997-06-30) & JP 09 053430 A (SUZUKI MOTOR CORP), 25 février 1997 (1997-02-25)

## Description

L'invention concerne un dispositif d'accouplement d'un organe rotatif fixé à une culasse d'un moteur de véhicule automobile à un arbre à cames monté tournant dans ladite culasse (voir US-A-4 565 168).

L'invention concerne plus particulièrement un dispositif d'accouplement d'un organe rotatif, fixé à une culasse d'un moteur de véhicule automobile, à un arbre à cames monté tournant dans ladite culasse, du type qui comporte un engrenage, interposé entre la culasse et l'organe rotatif, dans lequel un pignon menant, solidaire de l'arbre à cames, engrène avec un pignon mené qui est monté à rotation sur un axe reçu dans un perçage de la culasse et qui entraîne un arbre de l'organe rotatif par l'intermédiaire d'un joint d'accouplement homocinétique.

Ce type de dispositifs d'accouplement s'applique notamment à un organe rotatif du type d'une pompe à injection.

Les dispositifs conventionnels permettant l'accouplement d'un organe rotatif à un arbre à cames du véhicule comportent généralement une liaison directe entre l'arbre à cames et l'arbre de l'organe rotatif. Dans le cas selon lequel l'organe rotatif est une pompe d'injection, un tel dispositif ne permet pas de faire fonctionner la pompe d'injection à une vitesse adéquate puisque le régime désiré de la pompe d'injection est alors moindre que celui nécessaire pour la bonne alimentation du moteur.

Par ailleurs, les dispositifs conventionnels à liaison directe du type précité exercent des couples sur l'arbre de la pompe d'injection ont ainsi tendance à provoquer l'usure prématurée de la pompe.

Pour remédier à cet inconvénient, on a proposé un dispositif d'accouplement à engrenage du type décrit précédemment, dans lequel le joint homocinétique est constitué d'un joint dit "de Oldham" bien connu de l'état de la technique.

Cette conception permet notamment d'isoler l'arbre de l'organe rotatif des couples et efforts axiaux qui pourraient être produits par l'arbre à cames.

Dans ce dispositif, le pignon mené est monté directement sur son axe et y est arrêté axialement par un épaulement dudit axe. La lubrification de l'engrenage est assurée par un perçage de la culasse qui est agencé à proximité de l'engrenage et qui communique avec un circuit d'huile sous pression de ladite culasse.

Cette conception présente l'inconvénient de permettre le frottement du pignon mené sur l'épaulement de l'arbre qui le porte, ce qui risque de provoquer une usure accélérée du pignon mené.

Par ailleurs, le perçage de lubrification de la culasse étant agencé seulement à proximité de l'engrenage, il ne lubrifie qu'imparfaitement le pignon mené, qui risque alors de gripper sur son axe.

Pour remédier à ces inconvénients, l'invention propose un dispositif du type décrit précédemment comportant un montage du pignon mené qui réduit les risques de frottement dudit pignon.

Dans ce but, l'invention propose un dispositif du type décrit précédemment, caractérisé en ce que l'axe de rotation du pignon mené comporte au moins un conduit interne qui met en communication une extrémité de l'axe, alimentée par un circuit d'alimentation d'huile sous pression de la culasse, avec une extrémité opposée de l'axe débouchant au droit du pignon mené, pour assurer la lubrification de l'engrenage.

Selon d'autres caractéristiques de l'invention :
- le pignon mené est conformé en forme de cloche et il comporte au moins un alésage, fermé du côté opposé à la culasse par une paroi d'extrémité, qui est destiné à être monté avec un jeu axial sur l'axe du pignon mené pour permettre la circulation d'huile sous pression de l'intérieur vers l'extérieur du pignon mené,
- le conduit interne est axial et débouche aux deux extrémités opposées de l'axe du pignon mené,
- le dispositif d'accouplement comporte une bague de glissement qui est montée serrée dans l'alésage du pignon mené, et qui est interposée entre ledit pignon mené et l'axe,
- une face de la culasse, tournée vers l'alésage du pignon mené, comporte une rainure oblongue qui s'étend de part et d'autre du perçage de la culasse recevant l'axe du pignon mené suivant une dimension transversale correspondant sensiblement au diamètre de l'alésage du pignon mené, pour former une réserve d'huile facilitant le glissement du pignon mené sur la culasse,
- le joint homocinétique est un joint dit "de Oldham" conformé sous la forme d'un disque :
   - dont deux encoches radiales diamétralement opposées reçoivent avec un jeu orienté suivant une première direction radiale deux ergots diamétralement opposés qui s'étendent à partir axialement à partir de la paroi d'extrémité du pignon mené,
   - et dont une lumière centrale sensiblement rectangulaire, orientée perpendiculairement aux encoches, reçoit avec un jeu orienté suivant une seconde direction radiale perpendiculaire à la première un élément rectangulaire porté par l'extrémité de l'arbre de l'organe rotatif,
- la lumière centrale traverse le disque et une face d'extrémité de l'élément rectangulaire fait saillie hors de la lumière pour former une butée pour la paroi d'extrémité du pignon de manière à le maintenir axialement entre l'organe rotatif et la culasse,
- l'axe de rotation du pignon mené est vissé dans un taraudage du perçage de la culasse,
- l'axe de rotation du pignon mené est monté serré dans le perçage de la culasse,
- le pignon menant et le pignon mené comportent chacun un jeu de dentures hélicoïdales,
- le pignon menant et le pignon mené comportent chacun un jeu de dentures droites.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un dispositif d'accouplement selon un état antérieur de la technique ;
- la figure 2 est une vue en perspective éclatée d'un dispositif d'accouplement selon l'invention ;
- la figure 3 est une vue en coupe par le plan 3-3 de la figure 2 du dispositif d'accouplement selon l'invention.

Dans la description qui va suivre, des chiffres de référence identiques désignent des pièces identiques ou ayant des fonctions similaires.

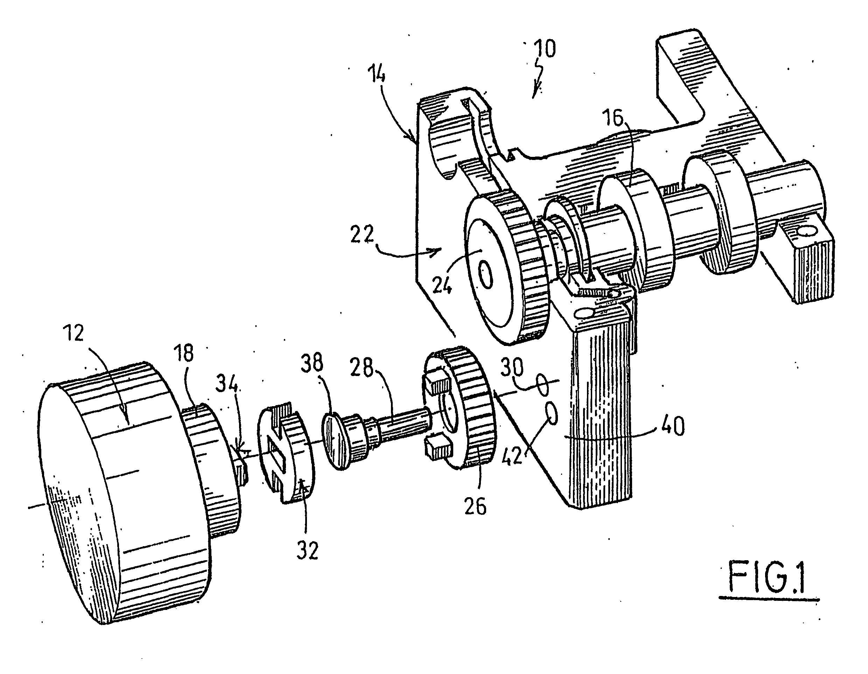

Par convention, les termes. "avant", "arrière", supérieur", "inférieur" désignent respectivement des éléments ou des positions orientés respectivement vers la gauche, la droite, le haut, ou le bas des figures 1 à 3.

On a représenté à la figure 1 l'ensemble d'un dispositif 10 d'accouplement réalisé conformément à un état antérieur de la technique.

De manière connue le dispositif 10 est destiné à permettre l'accouplement d'un organe rotatif 12, fixé à une culasse 14 d'un moteur de véhicule automobile, à un arbre à cames 16 qui est monté tournant dans ladite culasse 14.

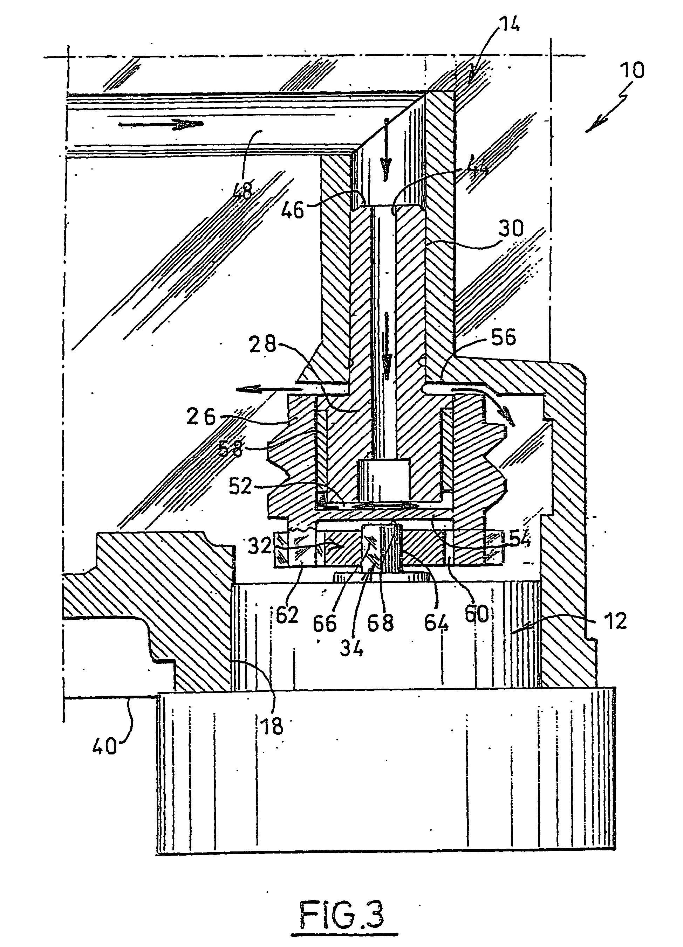

A titre d'exemple, et de manière non limitative de l'invention, l'organe rotatif 12 est par exemple constitué d'une pompe d'injection dont une portée cylindrique 18 est fixée et/ou vissée dans une portée conforme 20 de la culasse 14, comme représenté à la figure 3.

De manière connue, le dispositif 10 comporte un engrenage 22 qui est interposé entre la culasse 14 et l'organe rotatif 12. L'engrenage 22 comporte un pignon menant 24, solidaire de l'arbre 16 à cames, qui est par exemple monté en bout de l'arbre 16 à cames. Le pignon menant 24 engrène avec un pignon mené 26 qui est monté à rotation sur un axe 28 reçu dans un perçage 30 de la culasse et qui entraîne un arbre 34 de l'organe rotatif 12 par l'intermédiaire d'un joint 32 d'accouplement homocinétique. De manière connue, le joint 32 est par exemple constitué d'un joint dit "de Oldham" qui sera décrit plus en détail dans la suite de la présente description.

Cette configuration permet d'entraîner en rotation l'arbre 34 de l'organe rotatif 12 à une vitesse sensiblement différente de celle de l'arbre 16 à cames et par conséquent, en adaptant les nombres de dents respectifs des pignons menant 24 et mené 26, de permettre une adaptation optimale du régime de rotation de l'organe rotatif 12.

Dans ce dispositif, le pignon mené 26 est monté directement sur son axe 28 et il est arrêté axialement d'un côté par une face 40 de la culasse 14 et du côté opposé par un épaulement 38 de l'axe 28. Cette conception présente l'inconvénient de produire un frottement entre le pignon mené 26 et l'épaulement 38, qui peut à terme provoquer une dégradation du pignon 26.

Par ailleurs, la lubrification de l'engrenage 22 n'est assurée que par un perçage 42 de la culasse 14 qui est agencé à proximité de l'engrenage 22 et qui communique avec un circuit d'huile sous pression de la culasse 14. Cette conception, si elle permet de lubrifier correctement les dentures de l'engrenage 22, ne permet en revanche pas de lubrifier correctement le pignon mené 26, qui risque alors de gripper sur son axe 28.

Pour remédier à cet inconvénient, l'invention comporte un montage du pignon mené 26 qui réduit les risques de frottement dudit pignon 26.

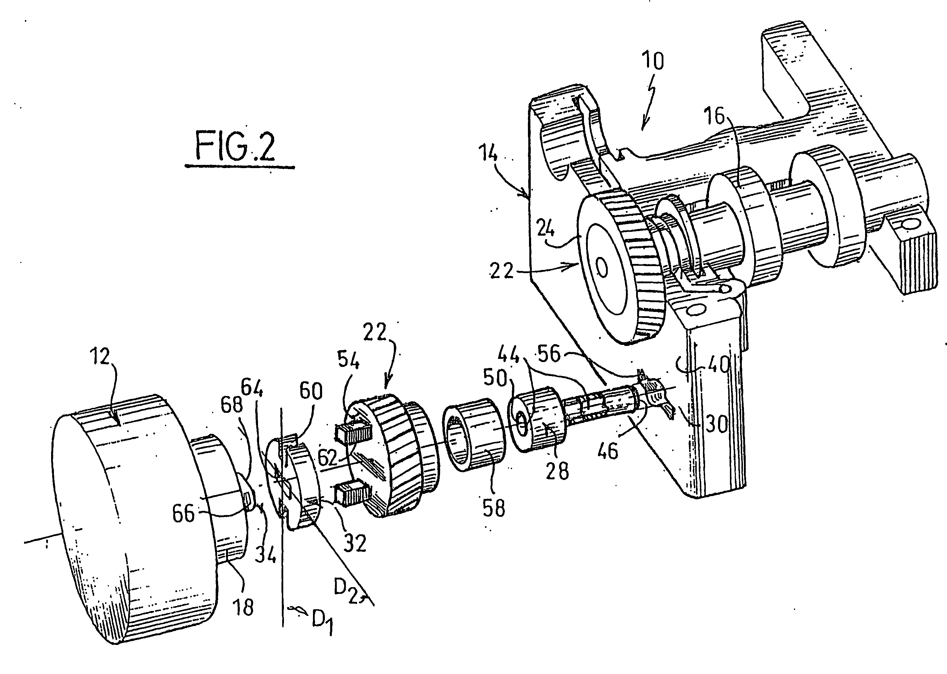

Dans ce but, comme l'illustrent les figures 2 et 3, l'invention propose un dispositif 10 du type décrit précédemment, caractérisé en ce que l'axe 28 de rotation du pignon mené comporte au moins un conduit interne 44 qui met en communication une extrémité 46 de l'axe 28, alimentée par un circuit 48 d'alimentation d'huile sous pression de la culasse 14, avec une extrémité 50 opposée de l'axe débouchant au droit du pignon mené 26, pour assurer la lubrification de l'engrenage 22.

Plus particulièrement, le conduit interne 28 est axial et débouche aux deux extrémités opposées 46 et 50 de l'axe 28 du pignon mené 26.

Selon un mode de réalisation de l'invention l'axe 28 de rotation du pignon mené est vissé dans un taraudage du perçage 30 de la culasse 14. En variante, l'axe 28 de rotation du pignon mené 26 peut être monté serré dans le perçage 30 de la culasse 14.

Par ailleurs, comme l'illustre la figure 3, le pignon mené 26 est conformé en forme de cloche et il comporte au moins un alésage 52, fermé du côté opposé à la culasse 14 par une paroi d'extrémité 54, qui est destiné à être monté avec un jeu axial sur l'axe 28 pour permettre la circulation d'huile sous pression de l'intérieur vers l'extérieur du pignon mené, comme représenté par les flèches de la figure 3.

Par ailleurs, pour faciliter le glissement du pignon fou 26 au contact de la culasse 14, la face 40 de la culasse qui est tournée vers l'alésage 52 du pignon mené 26, comporte une rainure oblongue 56 qui s'étend de part et d'autre du perçage 30 de la culasse recevant l'axe 28 du pignon mené 26 suivant une dimension transversale correspondant sensiblement au diamètre de l'alésage. 52 du pignon mené 26. De la sorte, la rainure oblongue 56 formé une réserve d'huile facilitant le glissement du pignon 26 mené sur la culasse 14.

Dans le mode de réalisation préféré de l'invention, le dispositif 10 comporte une bague 58 de glissement qui est montée serrée dans l'alésage 52 du pignon mené 26, et qui est interposée entre ledit pignon 26 mené et l'axe 28. Cette bague 58 peut notamment être réalisée en un matériau antifriction.

Dans le mode de réalisation préféré de l'invention, le joint homocinétique 32 est un joint dit "de Oldham" bien connu de l'état de la technique. Un tel joint permet notamment de rattraper les jeux radiaux existants entre deux axes positionnés sans tolérance drastique de montage.

A cet effet, le joint 32 est conformé sous la forme d'un disque dont deux encoches 60 radiales diamétralement opposées reçoivent avec un jeu orienté suivant une première direction radiale "D1" deux ergots 62 diamétralement opposés qui s'étendent à partir axialement à partir de la paroi 54 d'extrémité du pignon mené 26.

Le disque 32 comporte aussi une lumière centrale 64 sensiblement rectangulaire, orientée perpendiculairement aux encoches 60, qui reçoit avec un jeu orienté suivant une seconde direction radiale "D2" perpendiculaire à la première un élément rectangulaire 66 porté par l'extrémité de l'arbre 34 de l'organe rotatif 12.

Avantageusement, la lumière centrale 64 traverse le disque 32 et une face d'extrémité 68 de l'élément rectangulaire fait saillie hors de la lumière 64 pour former une butée pour la paroi 54 d'extrémité du pignon 26 de manière à le maintenir axialement entre l'organe rotatif 12 et- la culasse 14, comme représenté plus particulièrement à la figure 3.

Dans le mode de réalisation préféré de l'invention qui a été représenté à la figure 2, le pignon menant 24 et le pignon mené 26 comportent chacun un jeu de dentures hélicoïdales.

Avantageusement, cette configuration permet d'une part d'atténuer les acyclismes transmis par l'arbre à cames 16 et de rattraper et d'autre part de proposer un engrenage 22 dont les jeux de dentures sont rattrapés automatiquement par l'huile sous pression dans la rainure 56 et dans l'alésage 52.

En variante (non représentée), le dispositif selon l'invention peut comporter un pignon menant 24 et un pignon mené 26 munis chacun d'un jeu de dentures droites. Cette configuration permet, du fait de la pression d'huile qui règne dans la rainure 56 et dans l'alésage 52 de plaquer le pignon mené 26 au contact de la face d'extrémité 68 de l'arbre 3.4 de l'organe rotatif 12.

L'invention propose donc un dispositif d'accouplement d'un organe rotatif 12 à un arbre à cames 16 qui permet de faire fonctionner l'organe rotatif 12 à une vitesse différente de celle de l'arbre à cames et qui présente de hautes caractéristiques de fiabilité.

## Revendications

1. Dispositif (10) d'accouplement d'un organe rotatif, fixé à une culasse (14) d'un moteur de véhicule automobile, à un arbre à cames (16) monté tournant dans ladite culasse (14), du type qui comporte un engrenage (22), interposé entre la culasse (14) et l'organe rotatif (12), dans lequel un pignon menant (24), solidaire de l'arbre à cames (16), engrène avec un pignon mené (26) **caractérisé en ce que** le pignon mené (26) est monté à rotation sur un axe (28) reçu dans un perçage (30) de la culasse (14) et qui entraîne un arbre (34) de l'organe rotatif (12) par l'intermédiaire d'un joint (32) d'accouplement homocinétique,
l'axe (28) de rotation du pignon mené (26) comportant au moins un conduit interne (28) qui met en communication une extrémité (46) de l'axe (28), alimentée par un circuit (48) d'alimentation d'huile sous pression de la culasse (14), avec une extrémité (50) opposée de l'axe (28) débouchant au droit du pignon mené (26), pour assurer la lubrification de l'engrenage (22).

2. Dispositif (10) d'accouplement selon la revendication précédente, **caractérisé en ce que** le pignon mené (22) est conformé en forme de cloche et **en ce qu'**il comporte au moins un alésage (52), fermé du côté opposé à la culasse (14) par une paroi d'extrémité (54), qui est destiné à être monté avec un jeu axial sur l'axe (28) du pignon mené (26) pour permettre la circulation d'huile sous pression de l'intérieur vers l'extérieur du pignon mené (26).

3. Dispositif (10) d'accouplement selon l'une des revendications précédentes, **caractérisé en ce que** le conduit interne (44) est axial et débouche aux deux extrémités opposées (46,50) de l'axe (28) du pignon mené (26).

4. Dispositif (10) d'accouplement selon l'une quelconque des revendications précédentes, **caractérisé en ce qu'**il comporte une bague (58) de glissement qui est montée serrée dans l'alésage (52) du pignon mené (26), et qui est interposée entre ledit pignon mené (26) et l'axe (28).

5. Dispositif (10) d'accouplement selon l'une quelconque des revendications précédentes, **caractérisé en ce qu'**une face (40) de la culasse (14), tournée vers l'alésage (52) du pignon mené (26), comporte une rainure (56) oblongue qui s'étend de part et d'autre du perçage (30) de la culasse (14) recevant l'axe (28) du pignon mené (26) suivant une dimension transversale correspondant sensiblement au diamètre de l'alésage (30) du pignon mené (26), pour former une réserve d'huile facilitant le glissement du pignon mené (26) sur la culasse (14).

6. Dispositif (10) d'accouplement selon l'une quelconque des revendications 2 à 5, **caractérisé en ce que** le joint (32) homocinétique est un joint dit "de Oldham" conformé sous la forme d'un disque :
- dont deux encoches radiales (60) diamétralement opposées reçoivent avec un jeu orienté suivant une première direction radiale (D1) deux ergots (62) diamétralement opposés qui s'étendent axialement à partir de la paroi (54) d'extrémité du pignon mené (26),
- et dont une lumière centrale (64) sensiblement rectangulaire, orientée perpendiculairement aux encoches (60), reçoit avec un jeu orienté suivant une seconde direction radiale (D2) perpendiculaire à la première un élément rectangulaire (66) porté par l'extrémité de l'arbre (34) de l'organe rotatif (12).

7. Dispositif (10) d'accouplement selon la revendication précédente, **caractérisé en ce que** la lumière centrale (64) traverse le disque (32) et une face d'extrémité (68) de l'élément rectangulaire (66) fait saillie hors de la lumière (64) pour former une butée pour la paroi (54) d'extrémité du pignon (26) de manière à le maintenir axialement entre l'organe rotatif (12) et la culasse (14).

8. Dispositif (10) selon l'une quelconque des revendications précédentes, **caractérisé en ce que** l'axe (28) de rotation du pignon mené (26) est vissé dans un taraudage (30) du perçage de la culasse (14).

9. Dispositif (10) selon l'une quelconque des revendications 1 à 7, **caractérisé en ce que** l'axe (28) de rotation du pignon mené (26) est monté serré dans le perçage (30) de la culasse (14).

10. Dispositif (10) selon l'une quelconque des revendications précédentes, **caractérisé en ce que** le pignon menant (24) et le pignon mené (26) comportent chacun un jeu de dentures hélicoïdales.

11. Dispositif (10) selon l'une quelconque des revendications 1 à 9, **caractérisé en ce que** le pignon menant (24) et le pignon mené (26) comportent chacun un jeu de dentures droites.

## Patentansprüche

1. Vorrichtung (10) zur Kopplung eines drehenden Bauteils, das an einem Zylinderkopf (14) eines Motors eines Kraftfahrzeugs befestigt ist, mit einer Nockenwelle (16), die drehend in dem Zylinderkopf (14) montiert ist, von der Art, welche ein Getriebe (22) aufweist, das zwischen den Zylinderkopf (14) und das drehende Bauteil (12) gesetzt ist, in welchem ein Antriebsritzel (24), das fest mit der Nockenwelle (16) verbunden ist, mit einem Abtriebsritzel (26) in Eingriff ist, **dadurch gekennzeichnet, dass** das Abtriebsritzel (26) in Drehung auf einer Achse (28) montiert ist, die in einer Bohrung (30) des Zylinderkopfs (14) aufgenommen ist, und welches eine Welle (34) des drehenden Bauteils (12) über ein homokinetisches Kopplungsglied (32) antreibt, wobei die Drehachse (28) des Abtriebsritzels (26) mindestens eine innere Leitung (28) aufweist, welche ein Ende (46) der Achse (28), die durch einen Versorgungskreislauf (48) mit Öl unter Druck des Zylinderkopfs (14) versorgt wird, mit einem gegenüberligenden Ende (50) der Achse (28), die rechtwinklig zum Abtriebsritzel (26) mündet, in Strömungsverbindung setzt, um die Schmierung des Getriebes (22) sicherzustellen.

2. Kopplungsvorrichtung (10) nach dem vorangegangenen Anspruch, **dadurch gekennzeichnet, dass** das Abtriebsritzel (22) in Form einer Glocke ausgebildet ist und dass es mindestens eine Bohrung (52) aufweist, die auf der dem Zylinderkopf (14) gegenüberliegenden Seite durch eine Endwand (54) verschlossen ist, welche dafür bestimmt ist, mit einem axialen Spiel auf der Achse (28) des Abtriebsritzels (26) montiert zu werden, um die Zirkulation von Öl unter Druck von der Innenseite in Richtung zur Außenseite des Abtriebsritzels (26) zu erlauben.

3. Kopplungsvorrichtung (10) nach einem der vorangegangenen Ansprüche, **dadurch gekennzeichnet, dass** die innere Leitung (44) axial ist und an zwei gegenüberliegenden Enden (46, 50) der Achse (28) des Abtriebsritzels (26) mündet.

4. Kopplungsvorrichtung (10) nach irgendeinem der vorangegangenen Ansprüche, **dadurch gekennzeichnet, dass** sie einen Gleitring (58) aufweist, der in der Bohrung (52) des Abtriebsritzels (26) gepresst montiert ist und welcher zwischen das Abtriebsritzel (26) und die Achse (28) zwischengesetzt ist.

5. Kopplungsvorrichtung (10) nach irgendeinem der vorangegangenen Ansprüche, **dadurch gekennzeichnet, dass** eine Fläche (40) des Zylinderkopfs (14), die in Richtung zu der Bohrung (52) des Abtriebsritzels (26) gedreht ist, eine längliche Nut (56) aufweist, die sich beiderseits der Bohrung (30) des Zylinderkopfs (14) erstreckt, welche die Achse (28) des Abtriebsritzels (26) aufnimmt, gemäß einer Querabmessung im Wesentlichen entsprechend zum Durchmesser der Bohrung (30) des Abtriebsritzels (26), um eine Ölreserve zu bilden, die das Gleiten des Abtriebsritzels (26) an dem Zylinderkopf (14) erleichtert.

6. Kopplungsvorrichtung (10) nach irgendeinem der Ansprüche 2 bis 5, **dadurch gekennzeichnet, dass** das homokinetische Glied (32) ein als "von Oldham" bezeichnetes Glied ist, das in der Form einer Scheibe ausgestaltet ist:
- von der zwei radiale, diametral gegenüberliegende Aussparungen (60) mit einem Spiel, ausgerichtet gemäß einer ersten radialen Richtung (D1), zwei diametral gegenüberliegende Vorsprünge (62) aufnehmen, die sich axial ausgehend von der Wand (54) des Endes des Abtriebsritzels (26) erstrecken;
- und von der ein im Wesentlichen rechteckiges Langloch (64), das senkrecht zu den Aussparungen (60) ausgerichtet ist, mit einem Spiel, ausgerichtet gemäß einer zweiten radialen Richtung (D2) senkrecht zu der ersten, ein rechteckiges Element (66) aufnimmt, das durch das Ende der Welle (34) des drehenden Bauteils (12) getragen wird.

7. Kopplungsvorrichtung (10) nach dem vorangegangenen Anspruch, **dadurch gekennzeichnet, dass** das mittige Langloch (64) die Scheibe (32) durchquert und eine Endfläche (68) des rechteckigen Elements (66) aus dem Langloch (64) heraus vorragt, um einen Anschlag für die Endwand (54) des Ritzels (26) derart zu bilden, um es axial zwischen dem drehenden Bauteil (12) und dem Zylinderkopf (14) zu halten.

8. Vorrichtung (10) nach irgendeinem der vorangegangenen Ansprüche, **dadurch gekennzeichnet, dass** die Drehachse (28) des Abtriebsritzels (26) in ein Innengewinde (30) der Bohrung des Zylinderkopfs (14) eingeschraubt ist.

9. Vorrichtung (10) nach irgendeinem der Ansprüche 1 bis 7, **dadurch gekennzeichnet, dass** die Drehachse (28) des Abtriebsritzels (26) eingepresst in die Bohrung (30) des Zylinderkopfs (14) montiert ist.

10. Vorrichtung (10) nach irgendeinem der vorangegangenen Ansprüche, **dadurch gekennzeichnet, dass** das Antriebsritzel (24) und das Abtriebsritzel (26) jedes einen Satz einer schraubenförmigen Verzahnung aufweist.

11. Vorrichtung (10) nach irgendeinem der Ansprüche 1 bis 9, **dadurch gekennzeichnet, dass** das Antriebsritzel (24) und das Abtriebsritzel (26) jedes einen Satz einer geraden Verzahnung aufweist.

## Claims

1. An arrangement (10) for coupling a rotary member fixed to a cylinder head (14) of a motor vehicle engine to a camshaft (16) mounted rotatably in said cylinder head (14), of the type which comprises a gear assembly (22) interposed between the cylinder head (14) and the rotary member (12) and in which a drive pinion (24) fixed with respect to the camshaft (16) meshes with a driven pinion (26), **characterised in that** the driven pinion (26) is mounted rotatably on a spindle (28) received in a bore (30) in the cylinder head (14) and which drives a shaft (34) of the rotary member (12) by way of a homokinetic coupling joint (32), the spindle (28) for rotation of the driven pinion (26) comprising at least one internal conduit (44) which communicates an end (46) of the spindle (28) which is supplied by a circuit (48) for the supply of oil under pressure of the cylinder head (14) with an opposite end (50) of the spindle (28) opening in line with the driven pinion (26) to ensure lubrication of the gear assembly (22).

2. A coupling arrangement (10) according to the preceding claim **characterised in that** the driven pinion (22) is shaped in the form of a bell and that it comprises at least one bore (54) closed at the side opposite to the cylinder head (14) by an end wall (54), which is intended to be mounted with axial play on the spindle (28) of the driven pinion (26) to permit the circulation of oil under pressure from the interior towards the exterior of the driven pinion (26).

3. A coupling arrangement (10) according to one of the preceding claims **characterised in that** the internal conduit (44) is axial and opens at the two opposite ends (46, 50) of the spindle (28) of the driven pinion (26).

4. A coupling arrangement (10) according to any one of the preceding claims **characterised in that** it comprises a sliding ring (58) which is mounted gripped in the bore (52) in the driven pinion (26) and which is interposed between said driven pinion (26) and the spindle (28).

5. A coupling arrangement (10) according to any one of the preceding claims **characterised in that** a face (40) of the cylinder head (14), which is towards the bore (52) in the driven pinion (26), comprises an oblong groove (56) which extends on respective sides of the bore (30) in the cylinder head (14) which receives the spindle (28) of the driven pinion (26) in accordance with a transverse dimension substantially corresponding to the diameter of the bore (30) of the driven pinion (26) to form a reserve of oil for facilitating the sliding movement of the driven pinion (26) against the cylinder head (14).

6. A coupling arrangement (10) according to any one of claims 2 to 5 **characterised in that** the homokinetic joint (32) is a joint referred to as an 'Oldham' joint shaped in the form of a disc:
- of which two diametrally opposite radial notches (60) receive with a play oriented in a first radial direction (D1) two diametrally opposite lugs (62) which extend axially from the end wall (54) of the driven pinion (26),
- and of which a substantially rectangular central opening (64) oriented perpendicularly to the notches (60) receives with a play oriented in a second radial direction (D2) perpendicular to the first direction a rectangular element (66) carried by the end of the shaft (34) of the rotary member (12).

7. A coupling arrangement (10) according to the preceding claim **characterised in that** the central opening (64) passes through the disc (32) and an end face (68) of the rectangular element (66) projects from the opening (64) to form an abutment for the end wall (54) of the pinion (26) so as to hold it axially between the rotary member (12) and the cylinder head (14).

8. An arrangement (10) according to any one of the preceding claims **characterised in that** the spindle (28) for rotation of the driven pinion (26) is screwed into a screwthread (30) in the bore in the cylinder head (14).

9. An arrangement (10) according to any one of claims 1 to 7 **characterised in that** the spindle (28) for rotation of the driven pinion (26) is mounted gripped in the bore (30) in the cylinder head (14).

10. An arrangement (10) according to any one of the preceding claims **characterised in that** the drive pinion (24) and the driven pinion (26) each comprise a set of helical teeth.

11. An arrangement (10) according to any one claims 1 to 9 **characterised in that** the drive pinion (24) and the driven pinion (26) each comprise a set of straight teeth.
